# EUROPÄISCHE PATENTSCHRIFT

(11) **EP 0 807 043 B1**
(45) Veröffentlichungstag und Bekanntmachung des Hinweises auf die Patenterteilung: **30.09.1998**
(21) Anmeldenummer: 96902918.0
(22) Anmeldetag: 25.01.1996
(51) Int. Cl.: B60T 17/16, F16D 65/16

(54) **KOMBINIERTE BETRIEBS- UND FESTSTELLBREMSE**
COMBINED SERVICE AND PARKING BRAKE
FREIN PRINCIPAL ET DE STATIONNEMENT COMBINE

(30) Priorität: 31.01.1995 DE 19502927
(43) Veröffentlichungstag der Anmeldung: 19.11.1997
(73) Patentinhaber: ITT Automotive Europe GmbH, 60488 Frankfurt (DE)
(72) Erfinder: FEIGEL, Hans-Jörg, D-61191 Rosbach (DE); RIETH, Peter, E., D-65343 Eltville (DE)
(74) Vertreter: Portwich, Peter
(86) Internationale Anmeldenummer: EP9600291
(87) Internationale Veröffentlichungsnummer: WO9623685

(56) Entgegenhaltungen:
- DE-A- 2 708 629
- DE-A- 3 732 303
- FR-A- 2 368 390
- US-A- 4 215 767

## Beschreibung

Die Erfindung betrifft eine kombinierte Betriebs- und Feststellbremse, insbesondere für Kraftfahrzeuge, gemäß dem Oberbegriff des Patentanspruchs 1.

Eine derartige kombinierte Betriebs- und Feststellbremse ist aus der DE 37 32 303 Al bekannt. Die bekannte Bremse weist eine hydraulische Betätigungsvorrichtung in Form eines Bremszylinders mit zwei in entgegengesetzte Richtungen verschiebbaren Bremskolben auf. Der Bremszylinder ist über eine erste hydraulische Zuleitung mit der übrigen Bremsanlage eines Fahrzeugs verbunden. Eine zweite hydraulische Zuleitung führt zu einer hydraulisch betätigbaren Feststellvorrichtung in Form eines zum Bremszylinder im rechten Winkel angeordneten Hilfszylinders mit einem Hilfskolben, der einen Keil zwischen die beiden zuerst genannten Bremskolben im Bremszylinder schieben kann, um die beiden Bremskolben im zugespannten Zustand zu arretieren. Die bekannte Anordnung hat den Nachteil, daß für jede Bremse zwei hydraulische Zuleitungen erforderlich sind. Dadurch wird der Kostenaufwand für Material und Montage erheblich erhöht.

Es sind auch kombinierte Betriebs- und Feststellbremsen bekannt, bei denen für Betriebsbremsungen eine hydraulische Betätigungsvorrichtung und als Parkbremse mechanisch betätigbare Feststellvorrichtungen vorgesehen sind. Diese Anordnungen haben aber den Nachteil, daß neben der hydraulischen Zuleitung für jede Bremse noch ein zusätzliches Bremsseil vorgesehen werden muß. Auch hier ergibt sich ein erhöhter Material- und Fertigungsaufwand. Darüberhinaus kann das Bremsseil erst nach dem Einbau der Bremse am Fahrzeug montiert werden. Diese Montage liegt üblicherweise nicht im Bereich des besonders sachkundigen Bremsenherstellers, sondern wird im allgemeinen vom Automobilhersteller durchgeführt. Der Automobilhersteller hat hier neben dem Nachteil eines erhöhten Montageaufwandes zusätzlich das Risiko einer Fehlmontage zu tragen.

Der Erfindung liegt die Aufgabe zugrunde, eine kombinierte Betriebs- und Feststellbremse der genannten Art hinsichtlich der Betätigung der Feststellvorrichtung zu vereinfachen, so daß insbesondere der Aufwand für die Montage der Bremse am Fahrzeug verringert wird.

Die Lösung der Aufgabe ergibt sich aus dem kennzeichnenden Teil des Patentanspruchs 1. Kern der Lösung ist es, für die Betätigung der Betriebsbremse und der Feststellvorrichtung dieselbe hydraulische Zuleitung zu benutzen und die funktionelle Trennung durch die Wahl verschiedener Druckbereiche für die verschiedenen Funktionen zu erzielen.

In einer vorteilhaften Ausgestaltungsform gemäß Anspruch 2 ist vorgesehen, daß für die Betriebsbremsung der hydraulische Druck im Bereich von 0 bis 150 bar liegt, während für die Betätigung der Feststellvorrichtung ein Druckstoß im Bereich über 200 bar erforderlich ist. Dabei liegt der hydraulische Druck für die Betriebsbremsung in dem ansonsten üblichen Bereich, so daß diesbezüglich keine Änderung an der Bremsanlage erforderlich ist.

Um die Feststellvorrichtung gegen unbeabsichtigtes Lösen zu sichern, ist gemäß Anspruch 3 vorgesehen, daß der Bremskolben gegenüber dem Bremszylinder durch mechanische Rastmittel verrastbar ist. Es liegt jedoch auch im Bereich der vorliegenden Erfindung, den Bremskolben gegenüber dem Bremszylinder durch Reibschluß zu arretieren.

In einer bevorzugten Ausführungsform der Erfindung gemäß Anspruch 4 sind die Rastmittel der Feststellvorrichtung mittels eines hydraulischen Hilfskolbens betätigbar. Der Hilfskolben besitzt eine wesentlich kleinere Querschnittsfläche als der Bremskolben, so daß zur Erzeugung der für die Betätigung der Rastmittel vorgesehenen Betätigungskräfte ein hoher hydraulischer Druck erforderlich ist. Weiterhin kann der Hilfskolben entgegen der Betätigungsrichtung durch eine Rückstellfeder beaufschlagt sein.

Eine derartige Rückstellfeder ist insbesondere vorteilhaft im Zusammenhang mit der bevorzugten Ausführungsform gemäß Anspruch 5. Bei dieser Ausführungsform wird der Hilfskolben durch einen ersten Druckstoß in Betätigungsrichtung bewegt, wobei die Bewegung über eine mechanische Übertragungsvorrichtung mit Speicherfunktion auf die Rastmittel übertragen wird. Dabei verrasten die Rastmittel den Bremskolben mit dem Bremszylinder. Nach dem Druckstoß kehrt der Hilfskolben unter Wirkung der Rückstellfeder in seine Ausgangsstellung zurück, während der mechanische Speicher die Rastmittel in ihrer verrasteten Stellung hält. Bei einem zweiten Druckstoß bewegt sich der Hilfskolben wiederum in Betätigungsrichtung und wirkt erneut auf die mechanische Vorrichtung ein, die aber nun wieder in den ursprünglichen Schaltzustand zurück versetzt wird. Dabei werden die Rastmittel gelöst. Der Bremskolben ist jetzt wieder frei beweglich im Bremszylinder und kann in seine Ausgangsstellung zurückkehren. Dies geschieht nach dem zweiten Druckstoß, wenn der hydraulische Druck vollkommen nachgelassen hat. Dann kehrt auch der Hilfskolben in seiner Ausgangsstellung zurück und die Feststellvorrichtung ist bereit für eine erneute Betätigung.

In einem ersten Ausführungsbeispiel für die Feststellvorrichtung ist gemäß Anspruch 6 vorgesehen, daß die Rastmittel aus Klinken bestehen, die über den Umfang des Bremskolbens verteilt angeordnet sind. Die Klinken greifen in eine Innenverzahnung der Bremszylinderbohrung ein. In einem zweiten Ausführungsbeispiel gemäß Anspruch 7 können die Rastmittel aber auch am offenen Ende des Bremszylinders im Bereich der Stirnfläche des Bremskolbens angeordnet sein. Eine solche Anordnung hätte den Vorteil, daß keine zusätzlichen Fertigungsmaßnahmen am Bremszylinder, insbesondere keine Innenverzahnung angebracht werden müßte.

Mit den Ansprüchen 8 bis 10 soll auch eine Bremsanlage für Kraftfahrzeuge unter Schutz gestellt werden, die mit einer erfindungsgemäßen Bremse ausgestattet ist. Dabei kann der zur Betätigung der Feststellvorrichtung erforderliche Druckstoß durch eine vorzugsweise elektrisch angetriebene hydraulische Pumpe erzeugt werden. Als Druckmittelquelle kommt aber auch ein Druckmittelspeicher infrage, der durch eine hydraulische Pumpe ständig wieder aufgeladen wird. Falls eine derartige Druckmittelquelle mit eigener Energieversorgung nicht zur Verfügung steht, kann der Druckstoß auch durch einen Druckübersetzer erzeugt werden, der vom Fahrer mittels eines Handhebels oder Fußpedals betätigbar ist.

Um den so erzeugten Druckimpuls in die für die Betriebsbremsung vorgesehenen hydraulischen Leitungen einzuleiten ist in einer Weiterbildung der Erfindung gemäß Anspruch 9 vorgesehen, daß ein Umschaltventil die zur Erzeugung des Druckstosses dienende Druckmittelquelle mit den hydraulischen Leitungen verbindet. Ein derartiges Umschaltventil ist vorzugsweise elektrisch ansteuerbar, so daß die Feststellbremse durch einen elektrischen Impuls betätigt werden kann.

Für den Fall, daß bei einer Störung in der Bremsanlage ein Druckstoß zum Lösen der Feststellbremse nicht zur Verfügung steht, wird eine Hilfseinrichtung gemäß Anspruch 10 empfohlen. Durch zusätzliche mechanische Mittel ist hier die Feststellvorrichtung ohne Druckimpuls lösbar. Insbesondere im Falle einer elektrisch ansteuerbaren Feststellbremse können so zusätzliche Probleme bei einem Stromausfall vermieden werden.

Ein Ausführungsbeispiel der Erfindung wird nachfolgend anhand der Zeichnungen näher erläutert.

Es zeigen:

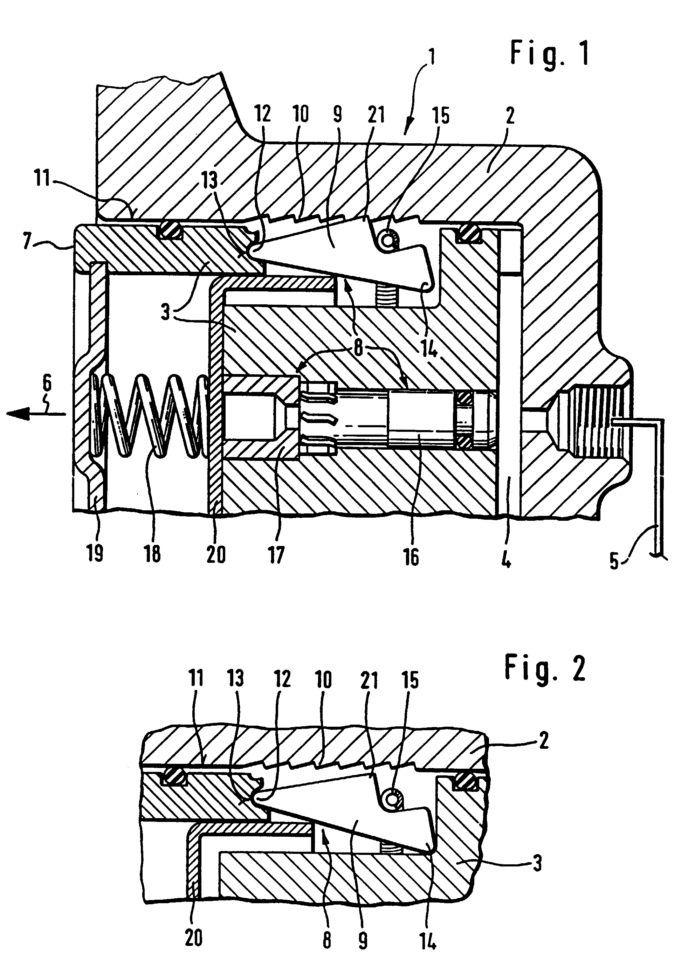

- Figur 1: eine geschnittene Teilansicht einer erfindungsgemäßen kombinierten Betriebs- und Feststellbremse im eingerasteten Zustand,
- Figur 2: einen Ausschnitt derselben Bremse im gelösten Zustand.

Eine erfindungsgemäße kombinierte Betriebs- und Feststellbremse besitzt wie in den Zeichnungen dargestellt eine hydraulische Betätigungsvorrichtung 1, die einen Bremszylinder 2 und einen Bremskolben 3 aufweist. Bei einer Betriebsbremsung wird der Innenraum 4 des Bremszylinders 2 über eine hydraulische Zuleitung 5 unter hydraulischen Druck gesetzt, bis sich der druckbeaufschlagte Bremskolben 3 in Axialrichtung 6 aus dem Bremszylinder 2 herausverschiebt, um mit seiner Stirnfläche 7 gegen einen nicht gezeigten Bremsbelag zu drücken und diesen an eine nicht gezeigte Bremsscheibe zu pressen. Die dargestellte hydraulische Betätigungsvorrichtung 1 ist für eine Scheibenbremse bestimmt und als Bestandteil eines Bremssattels zusammen mit diesem geeignet, zwei Bremsbeläge an die gegenüberliegenden Axialseiten der Bremsscheibe anzudrücken und zuzuspannen.

Prinzipiell läßt die Erfindung auch eine Ausführungsform für eine Trommelbremse zu, die jedoch hier nicht dargestellt wurde.

Die dargestellte Bremse besitzt weiterhin eine hydraulisch betätigbare Feststellvorrichtung 8 zum Arretieren des Bremskolbens 3 im zugespannten Zustand. Erfindungsgemäß ist die Feststellvorrichtung 8 über die für die Betriebsbremsung vorgesehene hydraulische Zuleitung 5 durch einen Druckstoß betätigbar, wobei der Druckstoß in einem Druckbereich oberhalb des für Betriebsbremsungen vorgesehenen Druckbereichs liegt. Bei dem gezeigten Ausführungsbeispiel sind für die Betriebsbremsungen ein Druckbereich von 0 bis 150 bar und für die Betätigung der Feststellvorrichtung 8 ein Druckstoß im Bereich über 200 bar vorgesehen.

Die Feststellvorrichtung 8 besitzt mechanische Rastmittel zum Verrasten des Bremskolbens 3 gegenüber dem Bremszylinder 2. Die Rastmittel bestehen aus Klinken 9, die in eine Innenverzahnung 10 der Bremszylinderbohrung 11 einrastbar sind. Die Klinken 9 sind über den Umfang des Bremskolbens 3 verteilt und in den Kolbenkörper versenkbar angeordnet. Die Klinken 9 besitzen ein erstes spitzes Ende 12, das in einer Vertiefung 13 des Bremskolbens 3 schwenkbar gelagert ist, und ein zweites Ende 14, das mittels einer Feder 15 in Richtung auf die Bremskolbenachse zu (Löserichtung) elastisch vorgespannt ist. Weiterhin besitzt die Feststellvorrichtung 8 einen hydraulischen Hilfskolben 16, der auf einen mechanischen Speicher 17 einwirkt. Der mechanische Speicher 17 kann zwei verschiedene Schaltzustände speichern, von denen einer zur Verrastung und der andere zum Lösen der Klinken 9 führt. Zur Feststellvorrichtung 8 gehört noch eine Rückstellfeder 18, die mit ihrem einen Ende in Axialrichtung 6 an einem Kolbenboden 19 und mit ihrem anderen Ende in die Gegenrichtung an dem mechanischen Speicher 17 abgestützt ist. Ein topfförmiges Übertragungselement 20 überträgt eine Axialbewegung des mechanischen Speichers 17 auf die Klinken 9.

Die Feststellvorrichtung 8 funktioniert wie folgt:

Durch die hydraulische Zuleitung 5 wird Hydraulikflüssigkeit in den Innenraum 4 des Bremszylinders 2 gepreßt, wobei sich der Bremskolben 3 wie auch bei einer Betriebsbremsung in Axialrichtung 6 in Bewegung setzt und die Bremsbeläge zugespannt werden. Bei Erreichen des Betätigungsdrucks für die Feststellvorrichtung 8 im Bereich über 200 bar setzt sich der Hilfskolben 16 in Axialrichtung 6 in Bewegung und verschiebt dabei einen Teil des mechanischen Speichers 17 bis zu einer Umschaltstellung. Nach dem Ende des Druckstosses ist der mechanische Speicher 17 umgeschaltet und gibt nunmehr die Bewegung entgegen der Richtung 6 frei. Der Hilfskolben 16 wird durch die Rückstellfeder 18 zusammen mit dem Übertragungselement entgegen der Richtung 6 in seine Ausgangsstellung zurückgeschoben. Dabei schiebt das Übertragungselement 20 unter Wirkung der Rückstellfeder 18 mit seinem radial äußeren Rand die Klinken 9 radial nach außen, bis die Rastzähne 21 in die Innenverzahnung 10 der Bremszylinderbohrung 11 eingreifen. Jetzt ist der Bremskolben 3 gegenüber dem Bremszylinder 2 verrastet und die Bremse ist im zugespannten Zustand festgestellt. Der hydraulische Druck im Innenraum 4 und in der hydraulischen Zuleitung kann jetzt vollständig absinken, ohne daß sich die Bremse löst.

Zum Lösen der Bremse wird erneut hydraulischer Druck über die Zuleitung 5 in den Innenraum 4 des Bremszylinders 2 gegeben. Dabei wird zunächst der Bremskolben 3 mit Druck beaufschlagt, bis die Klinken 9 gegenüber der Innenverzahnung 10 entlastet sind. Eine weitere Erhöhung des hydraulischen Drucks führt zu einer erneuten Betätigung des Hilfskolbens 16, der sich wiederum entgegen der Kraft der Rückstellfeder 18 in Axialrichtung 6 bewegt und dabei über den mechanischen Speicher das Übertragungselement 20 in dieselbe Richtung 6 verschiebt. Die entlasteten Klinken 9 kehren bei verschobenem Übertragungselement 20 unter Wirkung der Feder 15 in ihre Lösestellung zurück, wobei sie sich radial in Richtung auf die Kolbenachse zu bewegen. In dieser Betriebsphase schaltet wiederum der mechanische Speicher 17 in seinen Lösezustand um, so daß er das Übertragungselement 20 nach dem Ende des Druckstosses in der Lösestellung entgegen der Kraft der Rückstellfeder 18 festhält. Ein weiteres Nachlassen des hydraulischen Drucks hat ein Verschwinden der Zuspannkraft des Bremskolbens 3 zur Folge, wobei sich die Bremse vollkommen löst. Der mechanische Speicher 17 arbeitet gemäß der obigen Beschreibung nach Art des Kugelschreiberprinzips.

Der zur Betätigung der Feststellvorrichtung 8 erforderliche Druckstoß wird durch eine nicht gezeigte elektrisch angetriebene hydraulische Pumpe erzeugt, die der Fahrer des Fahrzeugs mittels eines elektrischen Kontakts aktiviert. Dabei wird gleichzeitig ein nicht gezeigtes elektrisch ansteuerbares Umschaltventil betätigt, das die hydraulischen Zuleitungen 5 der Radbremsen von der für Betriebsbremsungen vorgesehenen Druckmittelquelle auf die zur Betätigung der Feststellbremse vorgesehene elektrische Pumpe umschaltet.

## Patentansprüche

1. Kombinierte Betriebs- und Feststellbremse, mit einer hydraulischen Betätigungsvorrichtung (1), die zumindest einen Bremszylinder (2) mit zumindest einem Bremskolben (3) aufweist, der bei einer Betriebsbremsung durch Beaufschlagung mit hydraulischem Druck aus einer hydraulischen Zuleitung (5) im Bremszylinder (2) verschiebbar ist, um Bremsbeläge oder Bremsbacken zuzuspannen, und mit einer hydraulisch betätigbaren Feststellvorrichtung (8) zum Arretieren des Bremskolbens (3) im zugespannten Zustand, **dadurch gekennzeichnet,** daß die Feststellvorrichtung (8) über die für die Betriebsbremsung vorgesehene hydraulische Zuleitung (5) durch einen Druckstoß betätigbar ist, der in einem Druckbereich oberhalb des für Betriebsbremsungen vorgesehenen Druckbereichs liegt.

2. Bremse nach Anspruch 1, **dadurch gekennzeichnet,** daß der hydraulische Druck für eine Betriebsbremsung im Bereich unter 150 bar und der Druckstoß für die Betätigung der Feststellvorrichtung (8) im Bereich über 200 bar liegt.

3. Bremse nach Anspruch 1 oder 2, **dadurch gekennzeichnet**, daß die Feststellvorrichtung (8) mechanische Rastmittel (9, 10) zum Verrasten des Bremskolbens (3) gegenüber dem Bremszylinder (2) aufweist.

4. Bremse nach Anspruch 3, **dadurch gekennzeichnet**, daß die Feststellvorrichtung (8) einen hydraulischen Hilfskolben (16) zur Betätigung der Rastmittel (9) aufweist.

5. Bremse nach Anspruch 4, **dadurch gekennzeichnet,** daß die Feststellvorrichtung (8) einen mechanischen Speicher (17) aufweist, der mit den Rastmitteln (9) und dem Hilfskolben (16) nach der Art des Kugelschreiberprinzips zusammenwirkt, so daß bei einer ersten Betätigung des Hilfskolbens (16) durch einen ersten Druckstoß die Rastmittel (9,10) verrasten und bei einer zweiten Betätigung des Hilfskolbens (16) durch einen zweiten Druckstoß die Rastmittel (9,10) gelöst werden.

6. Bremse nach einem der Ansprüche 3 bis 5, **dadurch gekennzeichnet**, daß die Rastmittel (9,10) Klinken (9) aufweisen, die über den Umfang des Bremskolbens (3) verteilt, in den Kolbenkörper versenkbar angeordnet und in eine Innenverzahnung (10) der Bremszylinderbohrung (11) einrastbar sind.

7. Bremse nach einem der Ansprüche 3 bis 5, **dadurch gekennzeichnet,** daß die Rastmittel am offenen Ende des Bremszylinders (2) im Bereich der Stirnfläche (7) des Bremskolbens (3) angeordnet sind.

8. Bremsanlage für Kraftfahrzeuge mit einer Bremse nach einem der vorhergehenden Ansprüche, **dadurch gekennzeichnet,** daß der zur Betätigung der Feststellvorrichtung (8) erforderliche Druckstoß durch eine vorzugsweise elektrisch angetriebene hydraulische Pumpe oder durch einen Druckübersetzer erzeugt wird, der vom Fahrer mittels eines Handhebels oder Fußpedals betätigbar ist.

9. Bremsanlage nach Anspruch 8, **dadurch gekennzeichnet,** daß ein vorzugsweise elektrisch ansteuerbares Umschaltventil vorgesehen ist, über das der Druckimpuls in die für die Betriebsbremsung vorgesehenen hydraulischen Zuleitungen (5) einleitbar ist.

10. Bremsanlage nach Anspruch 8 oder 9, **dadurch gekennzeichnet,** daß zusätzliche mechanische Mittel zum Lösen der Feststellvorrichtung (8) ohne Druckimpuls vorgesehen sind.

## Claims

1. Combined service and parking brake including a hydraulic actuating device (1) which has at least one brake cylinder (2) and at least one brake piston (3) which is movable in the brake cylinder (2) in service brake operations by being applied with hydraulic pressure from a hydraulic supply line (5) to apply brake pads or brake shoes, and a hydraulically operable locking device (8) for fixing the brake piston (3) in the applied condition,
**characterized** in that the locking device (8) is operable by a pressure impact through the hydraulic supply line (5) provided for service brake operations, and the pressure impact is in a pressure range that is above the pressure range provided for service brake operations.

2. Brake as claimed in claim 1,
**characterized i**n that the hydraulic pressure for service brake operations is in the range of below 150 bar and the pressure impact for the operation of the locking device (8) is in the range of more than 200 bar.

3. Brake as claimed in claim 1 or claim 2,
**characterized** in that the locking device (8) includes mechanical locking means (9, 10) for locking engagement of the brake piston (3) relative to the brake cylinder (2).

4. Brake as claimed in claim 3,
**characterized** in that the locking device (8) has a hydraulic auxiliary piston (16) for operation of the locking means (9).

5. Brake as claimed in claim 4,
**characterized** in that the locking device (8) has a mechanical accumulator (17) which interacts with the locking means (9) and the auxiliary piston (16) in the way of the ball-point pen principle so that the locking means (9, 10) will become engaged by a first pressure impact during a first operation of the auxiliary piston (16), and the locking means (9, 10) will be disengaged by a second pressure impact during a second operation of the auxiliary piston (16).

6. Brake as claimed in any one of claims 3 to 5,
**characterized** in that the locking means (9, 10) are comprised of latches (9) which are distributed over the periphery of the brake piston (3) and adapted to be lowered into the piston body and which can be locked into an internal toothing (10) in the brake cylinder bore (11).

7. Brake as claimed in any one of claims 3 to 5,
**characterized** in that the locking means, at the open end of the brake cylinder (2), are arranged in the area of the end surface (7) of the brake piston (3).

8. Brake system for automotive vehicles including a brake as claimed in any one of the preceding claims,
**characterized** in that the pressure impact required for the operation of the locking device (8) is generated by a hydraulic pump which is preferably electrically driven or by a pressure converter which is operable by the driver by way of a hand lever or foot pedal.

9. Brake system as claimed in claim 8,
**characterized** in that a preferably electrically actuatable change-over valve is used to introduce the pressure pulse into the hydraulic supply lines (5) provided for service brake operations.

10. Brake system as claimed in claim 8 or 9,
**characterized** in that additional mechanical means are provided to release the locking device (8) without a pressure pulse.

## Revendications

1. Frein principal et de stationnement combiné, comprenant un dispositif d'actionnement hydraulique (1), qui comporte au moins un cylindre de frein (2) comprenant au moins un piston de frein (3) qui, lors d'un freinage de service en étant soumis à une pression hydraulique provenant d'une conduite d'alimentation hydraulique (5), peut être déplacé dans le cylindre de frein (2) de façon à serrer des garnitures de frein ou des mâchoires de frein, et un dispositif de blocage (8) à actionnement hydraulique servant à bloquer le piston de frein (3) en position de serrage, caractérisé en ce que le dispositif de blocage (8) est actionnable, par l'intermédiaire de la conduite d'alimentation hydraulique (5) prévue pour le freinage de service, au moyen d'une pointe de pression qui est située dans un domaine de pression supérieur au domaine de pression prévu pour des freinages de service.

2. Frein suivant la revendication 1, caractérisé en ce que la pression hydraulique est située dans le domaine inférieur à 150 bars pour un freinage de service et la pointe de pression est située dans le domaine supérieur à 200 bars pour l'actionnement du dispositif de blocage (8).

3. Frein suivant la revendication 1 ou 2, caractérisé en ce que le dispositif de blocage (8) comprend des moyens de verrouillage mécaniques (9, 10) servant à verrouiller le piston de frein (3) par rapport au cylindre de frein (2).

4. Frein suivant la revendication 3, caractérisé en ce que le dispositif de blocage (8) comprend un piston auxiliaire hydraulique (16) servant à actionner les moyens de verrouillage (9).

5. Frein suivant la revendication 4, caractérisé en ce que le dispositif de blocage (8) comprend un accumulateur mécanique (17) qui coopère avec les moyens de verrouillage (9) et le piston auxiliaire (16) à la façon du principe du stylo à bille, de sorte que, lors d'un premier actionnement du piston auxiliaire (16) sous l'effet d'une première pointe de pression, les moyens de verrouillage (9, 10) se verrouillent et, lors d'un second axialement du piston auxiliaire (16) sous l'effet d'une seconde pointe de pression, les moyens de verrouillage (9, 10) sont déverrouillés.

6. Frein suivant l'une des revendications 3 à 5, caractérisé en ce que les moyens de verrouillage (9, 10) comprennent des cliquets (9) qui sont répartis sur la périphérie du piston de frein (3), sont éclipsables dans le corps de piston et sont verrouillables dans une denture intérieure (10) de l'alésage de cylindre de frein (11).

7. Frein suivant l'une des revendications 3 à 5, caractérisé en ce que les moyens de verrouillage sont disposés à l'extrémité ouverte du cylindre de frein (2), dans la zone de la surface frontale (7) du piston de frein (3).

8. Système de freinage pour véhicule automobile, comportant un frein suivant l'une des revendications précédentes, caractérisé en ce que la pointe de pression nécessaire à l'actionnement du dispositif de blocage (8) est produite par une pompe hydraulique, de préférence à entraînement électrique, ou par un démultiplicateur de pression qui est actionnable par le conducteur au moyen d'un levier à main ou d'une pédale.

9. Système de freinage suivant la revendication 8, caractérisé en ce qu'il est prévu une valve de commutation, de préférence à commande électrique, au moyen de laquelle l'impulsion de pression est applicable dans les conduites d'alimentation hydraulique (5) prévues pour le freinage de service.

10. Système de freinage suivant la revendication 8 ou 9, caractérisé en ce qu'il est prévu des moyens mécaniques supplémentaire servant à déverrouiller le dispositif de blocage (8) sans impulsion de pression.
